# EUROPÄISCHE PATENTSCHRIFT

(11) **EP 1 208 962 B1**
(45) Veröffentlichungstag und Bekanntmachung des Hinweises auf die Patenterteilung: **11.02.2004**
(21) Anmeldenummer: 00125497.8
(22) Anmeldetag: 21.11.2000
(51) Int. Cl.: B29D 23/00, B29C 63/30, F16L 59/02

(54) **Verfahren zur kontinuierlichen Herstellung eines wenigstens drei Lagen aufweisenden Isolierschlauchs**
Method for the continuous production of an insulating pipe comprising at least three layers
Procédé de production en continu d'un tuyau d'isolation comportant au moins trois couches

(43) Veröffentlichungstag der Anmeldung: 29.05.2002
(73) Patentinhaber: Armacell Enterprise GmbH, 48153 Münster (DE)
(72) Erfinder: Weibel, Jürg P., 6332 Hagendorn (CH)
(74) Vertreter: Finck, Dieter, Dr.Ing.

(56) Entgegenhaltungen:
- EP-A- 0 279 024
- WO-A-98/56240
- DE-A- 3 338 071

## Beschreibung

Die Erfindung betrifft ein Verfahren zur kontinuierlichen Herstellung eines wenigstens drei Lagen aufweisenden Isolierschlauchs.

Aus der DE 37 14 917 A1 ist es bekannt, zur Herstellung eines mehrlagigen rohrförmigen Dämmmaterials Einzelstreifen einer Formstation zuzuführen und sie in dieser in zylindrische Form zu bringen sowie die aneinandergrenzenden, längs einer Mantellinie verlaufenden Stirnflächen miteinander durch Verkleben oder Verschweißen zu verbinden. Dies erfordert ein exaktes Zuschneiden der Seitenränder, was Abfall bedingt. Außerdem erweist sich das Verschweißen der sich in Längsrichtung des Isolierschlauchs erstreckenden Flächen als schwierig. Ein so gefertigter Schlauch neigt dazu, daß sich die Rohrummantelung oval verformt, wodurch kein gleichförmiger Isolierkontakt mit dem geschlossenen Rohr gewährleistet ist.

Aus der WO 98/56240 ist es bekannt, einen thermoplastischen Schaum mit einer Dichte von 10 bis 500 kg/m³ und mit 5 bis 95 Gewichtsprozent eines metallocenkatalysierten Polyethylens in Form eines Schlauchs in einem kontinuierlichen Prozess zu extrudieren und diesen Schlauch in einem weiteren Extrusionsvorgang an seiner Außenfläche mit einer Schutzschicht mit einer Dichte von 100 bis 1200 kg/m³ zu umhüllen. Da der Reibungskoeffizient auf der Innenseite des Schlauchs sehr groß ist, ist sein Aufbringen auf ein zu isolierendes Rohr mit Schwierigkeiten verbunden.

Zur Herstellung eines flexiblen wärmeisolierten Leitungsrohres ist es aus der EP 0 279 024 A bekannt, ein gewelltes Kunststoffrohr kontinuierlich von einem Vorrat abzuziehen, in Längsrichtung aufzuschlitzen und um ein ebenfalls kontinuierlich zugeführtes Innenrohr herumzulegen. Der Ringraum zwischen dem Innenrohr und dem Außenrohr wird mit Polyurethanschaum ausgeschäumt. Anschließend wird der Längsschlitz des äußeren gewellten Kunststoffrohrs durch Verkleben oder Verschweißen wieder verschlossen.

Nach der DE 33 38 071 A wird zur Herstellung eines flexiblen Fernwärmerohrs ein vorgefertigtes gewelltes Kunststoffrohr von einer Vorratsspule abgezogen, längs aufgeschnitten und auseinander gebogen. Von einer weiteren Vorratsspule wird ein gewelltes Innenrohr aus Metall abgezogen und mittels Abstandshaltern in dem Außenrohr in einer vorgegebenen Position fixiert. Dann wird das Außenrohr um das Innenrohr herum zusammengebogen und sein Schlitz längs verschweißt. In den Ringraum zwischen Außenrohr und Innenrohr wird selbstschäumender Kunststoff eingeträufelt.

Die EP 0 896 184 A2 beschreibt als Stand der Technik eine Dämmummantelung bestehend aus einer äußeren Schutzschicht, einer innenseitigen Gleitschicht und einer Mittelschicht aus dämmendem Material. Die einzelnen Schichten sind miteinander verbunden, wobei die äußere Schicht aus einem stabilen reißfesten Material besteht und die Mittelschicht Brandschutz-, Wärmedämmungs- und Schalldämmungseigenschaften hat. Die Ummantelung hat einen Längsschlitz zum elastischen Aufbringen auf ein Rohr, der dann mittels eines Klebebands oder anderen Befestigungseinrichtungen geschlossen wird. Bei solchen Ummantelungen kann es leicht zur Wasserdampfkondensation kommen, da das Klebeband unter Umständen leicht abfallen kann oder aufgrund von Faltenbildung durchgängige Hohlräume entstehen können, die Wasserdampfkanäle bilden.

Die der Erfindung zugrundeliegende Aufgabe besteht deshalb darin, ein Verfahren bereitzustellen, mit dem sich auf einfache Weise kontinuierlich ein wenigstens drei Lagen aufweisender Isolierschlauch herstellen läßt.

Diese Aufgabe wird erfindungsgemäß mit einem Verfahren zur kontinuierlichen Herstellung eines wenigstens drei Lagen aufweisenden Isolierschlauchs mit einer äußeren Schutzschicht, einer innenseitigen Gleitschicht und einer Mittelschicht aus dämmendem Material gelöst, bei welchem ein Schlauch aus einem wärmeisolierenden Schaumstoff extrudiert wird, der Schlauch unter Bildung von zwei planparallelen, im wesentlichen axialen Schnittflächen durchschnitten wird, der durchschnittene Schlauch im wesentlichen zu einer Platte ausgebreitet wird, auf die Innenseite des zu einer Platte ausgebreiteten Schlauchs ein Gleitmaterial haftend aufgebracht wird, der zu einer Platte ausgebreitete Schlauch mit dem innenseitig aufgebrachten Gleitmaterial in die Schlauchform mit aneinanderliegenden Schnittflächen zurückgeführt wird, die Schnittflächen des Schlauchs miteinander verbunden werden und auf die Außenseite des Schlauchs eine nahtlose Ummantelungschicht aufgebracht wird.

Das erfindungsgemäße Verfahren läßt sich in den aufgezeigten Schritten am gleichen Ort und zur gleichen Zeit wirtschaftlich durchführen und führt zu einem runden, leicht auf ein Rohr überschiebbares Produkt, dessen Außenfläche keine Schnittkante aufweist und eine hohe Reißfestigkeit aufweist. Aufgrund der Herstellungsschritte passen die Schnittflächen an der Verbindung exakt aufeinander, so daß eine optimale Verbindung durch Schweißen und Verkleben möglich ist, an der Verbindungsstelle also auch keine erhöhte Wasserdampfdiffusion möglich wird. Das Verfahren läßt sich problemlos an unterschiedliche Stärken anpassen, ist somit flexibel, und läßt keinen Abfall entstehen, der recyclisiert werden muß.

Das Gleitmaterial kann innenseitig durch Wärmeverbindung der Schlauchfläche mit einer Gleitfolie, durch Klebeverbindung mit einer solchen Gleitfolie oder durch Coextrusion auf die Innenfläche aufgebracht werden. Die nahtlose Ummantelungsschicht auf der Außenseite des Schlauchs kann aufgezogen oder aufextrudiert werden.

Das Gleitmaterial kann zur Verstärkung Fasern aufweisen, die in der Gleitfolie enthalten oder für das Aufextrudieren in das Gleitmaterial eingemischt sind. Als Gleitmaterial kann auch eine Schaumfolie verwendet werden, die andere Eigenschaften als der Schaumstoff aufweist, mit dem sie haftend verbunden ist. So kann beispielsweise als Schaumfolie Polypropylenschaum zur Erhöhung der Wärmestabilität verwendet werden. Die Schaumfolie kann auch aus mehreren Lagen zusammengesetzt sein, wobei die Eigenschaften der einzelnen Lagen unterschiedlich sein können, beispielsweise eine Lage brandhemmend wirkt. Zur Reduzierung der Wärmeleitfähigkeit kann auch ein Gleitmaterial mit Infrarot reflektierenden Eigenschaften eingesetzt werden.

Anhand einer Zeichnung, die schematisch die erfindungsgemäße Herstellung eines dreilagigen Isolierschlauchs zeigt, wird die Erfindung näher erläutert.

Aus einem Extruder 21 wird ein Schlauch 11 aus einem Isolierschaum extrudiert und mittels einer Schneidvorrichtung 22 bei seiner kontinuierlichen Weiterbewegung längs einer Radialebene unter Bildung von Schnittflächen 12 aufgeschnitten. Der aufgeschnittene Schlauch 11 wird durch eine Trompete 23 zu einer Platte 13 ausgebreitet, auf deren Innenseite ausgehend von einer Einrichtung 24 mit Hilfe einer Rolle 30 eine Gleitschicht 14 aufgebracht wird, die mit dem Isolierschaum durch aufgrund vorher aus einer Wärmezuführeinrichtung 25 zugeführten Wärme haftend verbunden wird. Die mit der Gleitschicht 14 auf ihrer Innenfläche versehene Platte 13 wird dann durch eine Zusammenführeinrichtung 26 wieder in die Schlauchform zurückgeführt, wobei gleichzeitig auf die Schnittflächen 12 mit Hilfe einer Haftmittelaufbringeinrichtung 27 Haftmittel aufgebracht wird. Aufgrund dieses Haftmittels wird der Schlauch unter einer Andrückeinrichtung 28 wieder dicht längs der Schnittflächen 12 zu einem Schlauch verbunden. Auf diesen Schlauch wird dann mit Hilfe eines Extruders 29 eine nahtfreie Ummantelung 16 haftend aufextrudiert, wodurch der dreilagige Isolierschlauch in kontinuierlicher Fertigung hergestellt ist.

Die haftende Verbindung zwischen der Gleitschicht 14 und dem Isolierschaum kann auch mittels eines Klebers bewirkt werden. Die Schnittflächen 12 können auch dadurch zu dem Schlauch verbunden werden, daß ihnen Kanten mittels Heissluft angeschmolzen und nachher mit Hilfe der Andrückeinrichtung 28 verbunden werden.

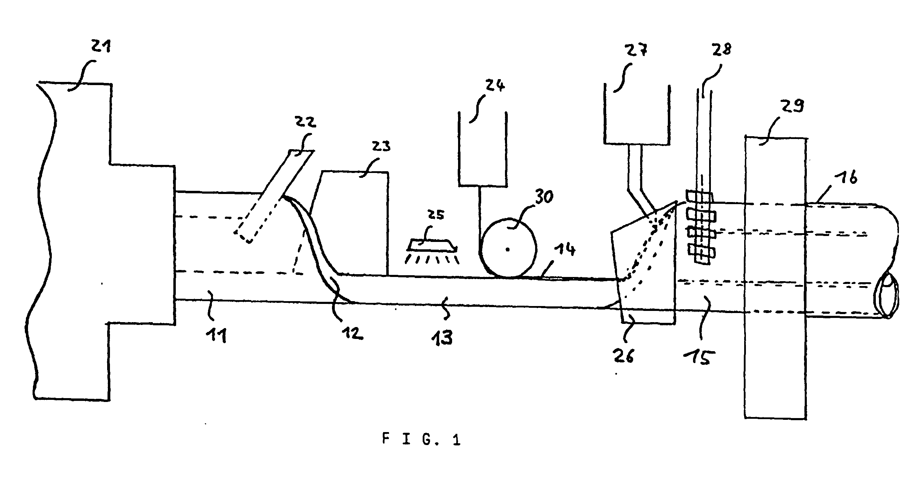

## Patentansprüche

1. Verfahren zur kontinuierlichen Herstellung eines wenigstens drei Lagen aufweisenden Isolierschlauchs mit einer äußeren Schutzschicht, einer innenseitigen Gleitschicht und einer Mittelschicht aus dämmendem Material, bei welchem
- ein Schlauch (11) aus einem wärmeisolierenden Schaumstoff extrudiert (21) wird,
- der Schlauch (11) unter Bildung von zwei planparallelen im wesentlichen axialen Schnittflächen (12) durchschnitten (22) wird,
- der durchschnittene Schlauch im wesentlichen zu einer Platte (13) ausgebreitet (23) wird,
- auf die Innenseite des zur Platte (13) ausgebreiteten Schlauchs (11) ein Gleitmaterial (14) haftend aufgebracht (24, 30) wird,
- der zur Platte (13) ausgebreitete Schlauch (11) mit dem innenseitig aufgebrachten Gleitmaterial (14) in die Schlauchform mit aneinanderliegenden Schnittflächen (12) zurückgeführt (26) wird,
- die Schnittflächen (12) des Schlauchs (11) miteinander verbunden (27, 28) werden und
- auf die Außenseite des Schlauchs (11) eine nahtlose Ummantelungsschicht (16) aufgebracht (29) wird.

2. Verfahren nach Anspruch 1, **dadurch gekennzeichnet, daß** das Gleitmaterial (14) als Gleitfolie auf die Innenseite des zur Platte (13) ausgebreiteten Schlauchs (11) aufgebracht und durch Wärme (25) oder Klebstoff haftend damit verbunden (24, 30) wird.

3. Verfahren nach Anspruch 2, **dadurch gekennzeichnet, daß** als Gleitmaterial (14) eine faserverstärkte Gleitfolie verwendet wird.

4. Verfahren nach Anspruch 1, **dadurch gekennzeichnet, daß** das Gleitmaterial (14) als Schicht auf die Innenseite des zur Platte (13) ausgebreiteten Schlauchs (11) aufextrudiert wird.

5. Verfahren nach Anspruch 4, **dadurch gekennzeichnet, daß** dem Gleitmaterial (14) Verstärkungsfasern beigemischt werden.

6. Verfahren nach einem der vorhergehenden Ansprüche, **dadurch gekennzeichnet, daß** die planparallelen Schnittflächen (12) durch Verklebung (27) oder Verschweißung miteinander verbunden (28) werden.

7. Verfahren nach einem der vorhergehenden Ansprüche, **dadurch gekennzeichnet, daß** die Ummantelungsschicht (16) auf die Außenseite des Schlauchs (11) als ein Stück aufgezogen oder aufextrudiert (29) wird.

8. Verfahren nach einem der vorhergehenden Ansprüche, **dadurch gekennzeichnet, daß** als Gleitmaterial (14) eine Schaumfolie verwendet wird, deren Eigenschaften sich von denen des angrenzenden Schaumstoffs unterscheiden.

9. Verfahren nach Anspruch 8, **dadurch gekennzeichnet, daß** als Schaumfolie eine Schaumfolie mit mehreren Lagen verwendet wird, die jeweils unterschiedliche Eigenschaften aufweisen.

10. Verfahren nach einem der vorhergehenden Ansprüche, **dadurch gekennzeichnet, daß** ein Gleitmaterial (14) mit Infrarot reflektierenden Eigenschaften verwendet wird.

## Claims

1. A process for the continuous manufacture of an insulating tube having at least three layers, comprising an outer protective layer, a sliding layer on the inside, and a middle layer of insulating material, in which process
- a tube (11) of thermally insulating foamed material is extruded (21),
- the tube (11) is cut (22) to form two plane-parallel, substantially axial cut surfaces (12),
- the cut tube is spread out (23) substantially to form a slab (13),
- a sliding material (14) is adhesively applied (24, 30) to the inside of the tube (11) that has been spread out to form a slab (13),
- the tube (11) that has been spread out to form a slab (13) and has the sliding material (14) applied on the inside is returned (26) to the tubular shape with cut surfaces (12) resting against each other,
- the cut surfaces (12) of the tube (11) are joined to each other (27, 28) and
- a seamless covering layer (16) is applied (29) to the outside of the tube (11).

2. A process according to claim 1, **characterised in that** the sliding material (14) is applied in the form of a sliding film to the inside of the tube (11) that has been spread out to form a slab (13), and is adhesively bonded thereto by heat (25) or adhesive material.

3. A process according to claim 2, **characterised in that** a fibre-reinforced sliding film is used as the sliding material (14).

4. A process according to claim 1, **characterised in that** the sliding material (14) is extruded as a layer over the inside of the tube (11) that has been spread out to form a slab (13).

5. A process according to claim 4, **characterised in that** reinforcing fibres are admixed with the sliding material (14).

6. A process according to any one of the preceding claims, **characterised in that** the plane-parallel cut surfaces (12) are joined to each other by adhesive bonding (27) or welding.

7. A process according to any one of the preceding claims, **characterised in that** the covering layer (16) is drawn or extruded (29) as one piece over the outside of the tube (11).

8. A process according to any one of the preceding claims, **characterised in that** a foamed film the properties of which differ from those of the adjacent foamed material is used as the sliding material (14).

9. A process according to claim 8, **characterised in that** a foamed film having a plurality of layers, each of which has different properties, is used as the foamed film.

10. A process according to any one of the preceding claims, **characterised in that** a sliding material (14) having infrared-reflecting properties is used.

## Revendications

1. Procédé pour la fabrication en continu d'un tuyau isolant qui présente au moins trois couches, avec une couche extérieure de protection, une couche intérieure de glissement et une couche centrale en matériau isolant, dans lequel :
- un tuyau (11) en mousse thermiquement isolante (21) est extrudé,
- le tuyau (11) est découpé (22) pour former deux surfaces de découpe (12) planes, parallèles, essentiellement axiales,
- le tuyau découpé est étalé (23) pour former essentiellement une plaque (13),
- un matériau de glissement (14) est appliqué de manière adhérente (24, 30) sur le côté intérieur du tuyau (11) étalé en forme de plaque (13),
- le tuyau (11) étalé en plaque (13) et qui comporte le matériau de glissement (14) appliqué sur son côté intérieur est ramené (26) en forme d'un tuyau avec les surfaces de découpe (12) placées l'une contre l'autre,
- les surfaces de découpe (12) du tuyau (11) sont reliées (27, 28) l'une à l'autre et
- une couche d'enveloppe (16) sans soudure est appliquée (29) sur le côté extérieur du tuyau (11).

2. Procédé selon la revendication 1, **caractérisé en ce que** le matériau de glissement (14) est appliqué sous la forme d'une feuille de glissement sur le côté intérieur du tuyau (11) étalé en plaque (13) et relié (24, 30) à ce dernier de manière à y adhérer par l'action de la chaleur (25) ou par un adhésif.

3. Procédé selon la revendication 2, **caractérisé en ce que** l'on utilise comme matériau de glissement (14) une feuille de glissement renforcée de fibres.

4. Procédé selon la revendication 1, **caractérisé en ce que** le matériau de glissement (14) est appliqué sous la forme d'une couche extrudée sur le côté intérieur du tuyau (11) étalé en plaque (13).

5. Procédé selon la revendication 4, **caractérisé en ce que** des fibres de renfort sont ajoutées au matériau de glissement (14).

6. Procédé selon l'une des revendications précédentes, **caractérisé en ce que** les surfaces de découpe (12) parallèles et planes sont reliées (28) l'une à l'autre par collage (27) ou par soudage.

7. Procédé selon l'une des revendications précédentes, **caractérisé en ce que** la couche d'enveloppe (16) est appliquée ou extrudée (29) en une pièce sur le côté extérieur du tuyau (11).

8. Procédé selon l'une des revendications précédentes, **caractérisé en ce que** l'on utilise comme matériau de glissement (14) une feuille de mousse dont les propriétés sont différentes de celles de la mousse adjacente.

9. Procédé selon la revendication 8, **caractérisé en ce que** l'on utilise comme feuille de mousse une feuille de mousse en plusieurs couches qui présentent chacune des propriétés différentes.

10. Procédé selon l'une des revendications précédentes, **caractérisé en ce que** l'on utilise un matériau de glissement (14) qui présente des propriétés de réflexion de l'infrarouge.
